# FASCICULE DE BREVET EUROPEEN

(11) **EP 3 417 254 B1**
(45) Date de publication et mention de la délivrance du brevet: **17.06.2020**
(21) Numéro de dépôt: 17708182.5
(22) Date de dépôt: 16.02.2017
(51) Int. Cl.: G01J 1/42, G01J 1/46, G01S 7/487, H04N 3/14

(54) **CIRCUIT DE DÉTECTION D'IMPULSIONS LUMINEUSES**
SCHALTUNG ZUR DETEKTION VON LICHTPULSEN
CIRCUIT FOR DETECTING LIGHT PULSES

(30) Priorité: 18.02.2016 FR 1600269
(43) Date de publication de la demande: 26.12.2018
(73) Titulaire: Safran Electronics & Defense, 92100 Boulogne-Billancourt (FR)
(72) Inventeur: MARTINEZ, Alain, 92100 Boulogne Billancourt (FR)
(74) Mandataire: Lavaud, Thomas
(86) Numéro de dépôt international: PCT/EP2017/053570
(87) Numéro de publication internationale: WO 2017/140822

(56) Documents cités:
- US-A1- 2010 207 028
- US-A1- 2010 226 495
- US-A1- 2012 261 553

## Description

L'invention concerne le domaine des circuits de détection d'impulsions lumineuses telles que des impulsions laser.

### ARRIERE PLAN DE L'INVENTION

Une matrice de détection laser comporte classiquement une pluralité de dispositifs de détection comprenant chacun une photodiode et un circuit de détection. Les dispositifs de détection sont agencés en lignes et en colonnes pour former des pixels de la matrice de détection laser.

Chaque photodiode transforme un rayonnement lumineux incident en un photo-courant. Chaque circuit de détection comporte classiquement une capacité d'intégration qui intègre le photo-courant pendant une période d'intégration prédéterminée. La tension aux bornes de la capacité d'intégration, qui est proportionnelle au photo-courant à l'issue de la période d'intégration, est alors exploitée pour détecter la présence d'impulsions laser dans le rayonnement lumineux incident.

Cependant, outre d'éventuelles impulsions laser, le rayonnement lumineux incident qui atteint chaque photodiode comprend un certain niveau de bruit de fond lumineux qui dépend de l'environnement lumineux de la photodiode.

L'une des difficultés principales de la détection d'impulsions laser consiste à extraire efficacement du rayonnement lumineux incident les impulsions laser, c'est-à-dire à réduire au maximum le taux de fausses alarmes résultant de la détection de signaux parasites compris dans le bruit de fond lumineux, sans pour autant affecter la probabilité de détection des impulsions laser. US2012/0261553 A1 divulgue un circuit de détection connu.

### OBJET DE L'INVENTION

L'invention a pour objet d'améliorer la détection d'impulsions lumineuses telles que des impulsions laser par un circuit de détection.

### RESUME DE L'INVENTION

En vue de la réalisation de ce but, on propose un circuit de détection d'impulsions lumineuses destiné à être connecté à une photodiode, le circuit de détection comportant une capacité d'intégration adaptée à intégrer un photo-courant produit par la photodiode, des moyens de décharge destinés à décharger la capacité d'intégration, et des moyens de comparaison adaptés à comparer une tension d'intégration aux bornes de la capacité d'intégration avec un seuil de tension de référence pour produire un signal de détection d'une impulsion lumineuse.

Selon l'invention, le seuil de tension de référence est un seuil auto-adaptatif dépendant d'un niveau de fond lumineux résiduel.

Lorsqu'un seuil de tension de référence fixe est utilisé, le seuil de tension de référence fixe doit être élevé pour éviter de détecter de manière intempestive des impulsions lumineuses à cause de fluctuations résiduelles du niveau de fond lumineux résiduel d'une scène vue par la photodiode.

Cependant, l'utilisation d'un seuil de tension de référence élevé tend à réduire la sensibilité de détection du circuit de détection.

Au contraire, grâce au seuil de tension de référence auto-adaptatif, le circuit de détection de l'invention s'adapte au niveau de fond lumineux résiduel du pixel considéré et réduit le taux de fausses alarmes tout en conservant une sensibilité de détection élevée.

L'invention concerne également un dispositif de détection comprenant une photodiode et un tel circuit de détection, et une matrice de détection comportant une pluralité de tels dispositifs de détection.

D'autres caractéristiques et avantages de l'invention ressortiront à la lecture de la description qui suit d'un mode de réalisation particulier, non limitatif de l'invention.

### BREVE DESCRIPTION DES DESSINS

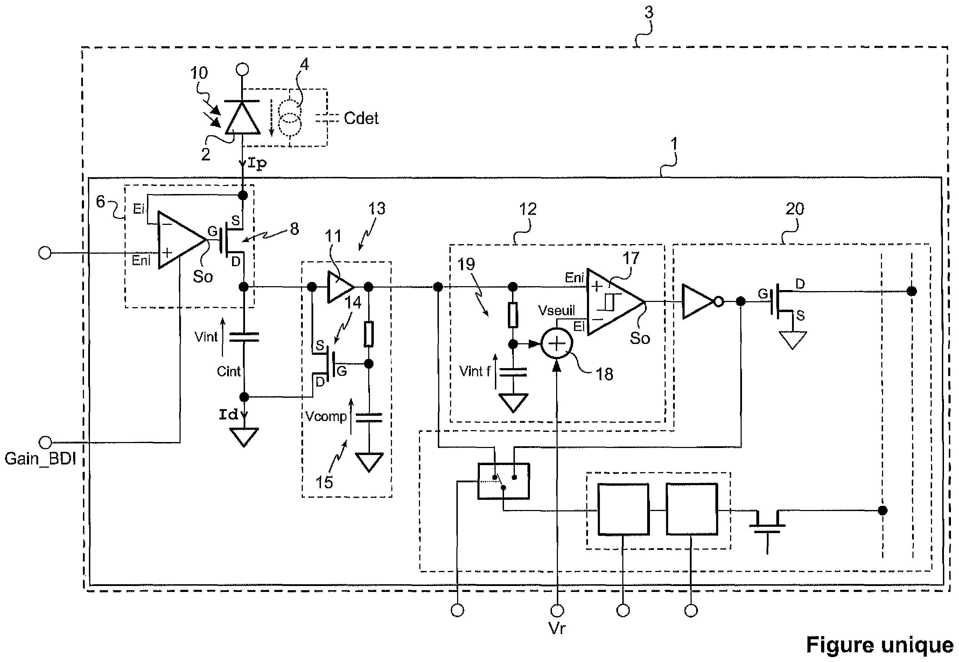

Il sera fait référence au dessin annexé qui comprend une figure unique représentant un schéma électrique du circuit de détection selon l'invention.

### DESCRIPTION DETAILLEE DE L'INVENTION

En référence à la figure unique, le circuit de détection de l'invention 1 est connecté à une photodiode 2. Le circuit de détection 1 et la photodiode 2 constituent un dispositif de détection 3 formant un pixel d'une matrice de détection qui comporte une pluralité de tels dispositifs de détection agencés en lignes et en colonnes.

La photodiode 2 est ici une photodiode hybride, de type InGaAs (c'est à dire qu'un élément sensible de la photodiode comporte une couche en arséniure d'indium-gallium).

La photodiode 2 peut être modélisée par une source de courant 4 en parallèle avec une capacité Cdet.

Le circuit de détection 1 est un circuit du type à injection directe bufferisée (« Buffered Direct Injection » en anglais).

Le circuit de détection 1 comporte ainsi un bloc d'injection directe bufferisée 6 qui comprend un amplificateur 7 et un premier transistor MOSFET 8. Une sortie So de l'amplificateur 7 est connectée à une grille G du premier transistor MOSFET 8. Une entrée inverseuse Ei de l'amplificateur 7 est connectée à une source S du premier transistor MOSFET 8.

Le bloc d'injection directe bufferisée 6 met en œuvre un asservissement qui permet de réduire l'impédance d'entrée du premier transistor MOSFET 8 et d'améliorer le contrôle de la polarisation de la photodiode 2. Les variations d'impédance de la capacité Cdet sont ainsi limitées et l'injection de courant est plus efficace dans une capacité d'intégration Cint.

La capacité d'intégration Cint est connectée à un drain D du premier transistor MOSFET 8. La capacité d'intégration Cint est adaptée à intégrer un photo-courant Ip produit par la photodiode 2 et résultant d'un rayonnement lumineux incident 10 atteignant la photodiode 2.

La valeur de capacité de la capacité d'intégration Cint est nettement inférieure à la valeur de capacité de la capacité Cdet, et donc le gain de conversion courant-tension du circuit de détection 1 est relativement important.

Le gain de conversion courant-tension peut par ailleurs être commandé collectivement (c'est-à-dire pour l'ensemble des dispositifs de détection de la matrice de détection), afin de s'adapter continuellement à l'amplitude des impulsions lumineuses. La tension Gain_BDI permet de commander le gain de conversion courant-tension

La détection d'impulsions lumineuses présentes dans le rayonnement lumineux incident 10, telles que des impulsions laser, consiste à exploiter, à intervalles réguliers égaux chacun à une période d'intégration prédéterminée, une tension d'intégration Vint aux bornes de la capacité d'intégration Cint. La tension d'intégration Vint résulte de l'intégration du photo-courant Ip par la capacité d'intégration Cint. Grâce au gain de conversion courant-tension relativement important évoqué plus tôt, la tension d'intégration Vint est suffisamment élevée pour permettre de détecter la présence ou non, dans le photo-courant Ip, d'une impulsion de courant représentative d'une impulsion lumineuse.

L'exploitation de la tension d'intégration Vint consiste à comparer la tension d'intégration Vint aux bornes de la capacité d'intégration Cint avec un seuil de tension de référence Vseuil. La présence, dans le photo-courant Ip, d'une impulsion de courant représentative d'une impulsion lumineuse au cours d'une période d'intégration aura en effet pour conséquence d'augmenter légèrement la tension d'intégration Vint, ladite légère augmentation étant détectée par comparaison avec le seuil de tension de référence Vseuil. La comparaison est effectuée par des moyens de comparaison 12 qui seront décrits plus bas.

Cependant, il convient de décharger la capacité d'intégration Cint de manière régulière, pour qu'une augmentation détectée de la tension d'intégration Vint corresponde bien à une impulsion de courant représentative d'une impulsion lumineuse, et non à une accumulation de charges dans la capacité d'intégration Cint résultant de l'intégration du photo-courant Ip au cours des périodes d'intégration précédentes.

Le circuit de détection 1 comporte à cet effet des moyens de décharge 13 adaptés à décharger la capacité d'intégration Cint de manière continue, c'est-à-dire que les moyens de décharge 13 fonctionnent en permanence et pas uniquement, par exemple, à l'issue d'une période d'intégration.

Les moyens de décharge 13 comportent un deuxième transistor Mosfet 14 dont une source S et un drain D sont connectés aux bornes de la capacité d'intégration Cint et dont une grille G est reliée à un filtre passe-bas de décharge 15. La source S est isolée par un suiveur de tension 11 (qui est un amplificateur d'isolation à forte impédance d'entrée). Le filtre passe-bas de décharge 15 est connecté à la capacité d'intégration Cint. Le filtre passe-bas de décharge 15 est ici un filtre RC.

Le filtre passe-bas de décharge 15 permet de produire une tension de compensation Vcomp. La tension de compensation Vcomp est une composante de la tension Vint qui résulte de la présence d'un courant de fond dans le photocourant Ip. Le courant de fond est généré par la photodiode 2 et provient d'un éclairement de fond lumineux présent dans le rayonnement lumineux incident 10. La tension de compensation Vcomp correspond à la tension d'intégration Vint à laquelle a été retranchée par le filtre passe-bas de décharge 15 une composante résultant d'une impulsion de courant générée par une impulsion lumineuse.

L'application de la tension de compensation Vcomp sur la grille G du deuxième transistor Mosfet 14 permet de générer un courant de décharge Id proche du courant de fond qui décharge la capacité d'intégration Cint de manière continue.

On met ainsi en œuvre un filtrage passe-haut en réalisant une « rétro-injection » du courant de décharge Id généré grâce au filtre passe-bas de décharge 15.

Le filtre passe-bas de décharge 15 est aussi chargé de supprimer des composantes hautes fréquences résiduelles de la tension Vint.

Les moyens de décharge 13 permettent donc de décharger automatiquement la capacité d'intégration Cint, mais aussi de soustraire, en opposition de phase, la majeure partie des fluctuations du courant de fond de la scène.

Les moyens de comparaison 12 comparent ensuite la tension d'intégration Vint, débarrassée d'une grande partie de ses fluctuations de courant de fond de scène, avec le seuil de tension de référence Vseuil. Les moyens de comparaison 12 comportent un comparateur 17, un sommateur 18 et un filtre passe-bas de détection 19. Le filtre passe-bas de détection 19 est ici un deuxième filtre RC.

Le filtre passe-bas de détection 19 filtre le signal Vint en sortie du suiveur de tension 11 et est destiné à filtrer la tension d'intégration Vint pour obtenir une tension d'intégration Vintf filtrée de ses composantes résultant d'impulsions lumineuses à haute fréquence.

La tension d'intégration filtrée Vintf, tout comme la tension de compensation Vcomp, correspond donc à la tension d'intégration Vint à laquelle a été retranchée une composante résultant d'une impulsion de courant générée par une impulsion lumineuse. Le seuil de tension de référence Vseuil est un seuil auto-adaptatif qui résulte d'une addition, via le sommateur 18, du niveau du fond Vint_F présent dans le rayonnement lumineux incident 10 et d'un seuil de tension Vr, réglable extérieurement et collectivement pour obtenir le seuil de tension de référence final Vseuil.

Le seuil de tension réglable Vr est réglé de sorte que, pour chaque pixel, le seuil de tension de référence Vseuil soit suffisamment au-dessus du niveau du bruit de fond pour éviter de générer de fausses alarmes ou pour s'adapter à des impulsions laser plus importantes, par exemple.

Le seuil de tension réglable Vr est réglé grâce à une tension de réglage unique pour tous les pixels, soit une fois, par essai, au moment de la mise au point de la matrice de détection, soit de manière continue par un composant de type FPGA ou microcontrôleur.

La tension d'intégration Vint est appliquée sur une entrée non inverseuse Eni du comparateur 17. Le seuil de tension de référence Vseuil est appliqué sur une entrée inverseuse Ei du comparateur 17. Le comparateur 17 compare la tension d'intégration Vint avec le seuil de tension de référence Vseuil.

Lorsque la tension d'intégration Vint est supérieure au seuil de tension de référence Vseuil, le comparateur produit sur sa sortie So un signal numérique égal à « 1 ». Lorsque la tension d'intégration Vint est inférieure ou égale au seuil de tension de référence Vseuil, le comparateur produit sur sa sortie So un signal numérique égal à « 0 ».

Le circuit de détection 1 comporte des moyens de mémorisation 20 qui mémorisent les valeurs successives du signal numérique ou analogique. Les lignes et les colonnes de la matrice de détection sont multiplexées pour produire des signaux numériques égaux à « 0 » ou à « 1 » ou analogiques pour l'ensemble des pixels provenant des moyens de mémorisation 20 de chaque circuit de détection 1 des dispositifs de détection 3 de la matrice de détection.

Avantageusement, le circuit de détection 1 est au moins partiellement mis en œuvre sur un ASIC.

L'invention est définie par les revendications suivantes.

## Revendications

1. Circuit de détection d'impulsions lumineuses destiné à être connecté à une photodiode (2), le circuit de détection comportant une capacité d'intégration (Cint) adaptée à intégrer un photocourant (Ip) produit par la photodiode, des moyens de décharge (13) destinés à décharger la capacité d'intégration, et des moyens de comparaison (12) adaptés à comparer une tension d'intégration (Vint) aux bornes de la capacité d'intégration avec un seuil de tension de référence (Vseuil) pour produire un signal de détection d'une impulsion lumineuse, **caractérisé en ce que** le seuil de tension de référence (Vseuil) est un seuil auto-adaptatif dépendant d'un niveau de bruit de fond lumineux.

2. Circuit de détection selon la revendication 1, dans lequel les moyens de comparaison comportent un comparateur (17), un filtre passe-bas de détection (19) connecté à la capacité d'intégration (Cint) et destiné à filtrer la tension d'intégration pour obtenir une tension d'intégration filtrée (Vintf), un sommateur (18) pour ajouter à la tension d'intégration filtrée un seuil de tension réglable (Vr) pour obtenir le seuil de tension de référence, le seuil de tension de référence étant appliqué sur une entrée inverseuse du comparateur (17) et la tension d'intégration étant appliquée sur une entrée non inverseuse du comparateur (17).

3. Circuit de détection selon la revendication 2, dans lequel le filtre passe-bas de détection (19) est un filtre RC adapté à supprimer des impulsions lumineuses à hautes fréquences du signal Vint.

4. Circuit de détection selon la revendication 1, dans lequel les moyens de décharge (13) sont adaptés à décharger la capacité d'intégration (Cint) de manière continue.

5. Circuit de détection selon la revendication 1, dans lequel les moyens de décharge comportent un transistor Mosfet (14) dont une source et un drain sont connectés aux bornes de la capacité d'intégration et dont une grille est reliée à un filtre passe-bas de décharge (15) relié à la capacité d'intégration.

6. Circuit de détection selon la revendication 5, dans lequel le filtre passe-bas de décharge (15) est un filtre RC chargé de supprimer des composantes hautes fréquences résiduelles du signal Vint.

7. Circuit de détection selon l'une des revendications précédentes, le circuit de détection étant du type à injection directe bufferisée

8. Circuit de détection selon la revendication 7, présentant un gain pouvant être commandé collectivement par une tension (Gain_BDI).

9. Dispositif de détection comprenant une photodiode et un circuit de détection selon l'une des revendications précédentes.

10. Matrice de détection comportant une pluralité de dispositifs de détection selon la revendication 8 agencés en lignes et en colonnes.

## Patentansprüche

1. Detektionsschaltung zur Detektion von Lichtimpulsen, die dazu bestimmt ist, an eine Photodiode (2) angeschlossen zu werden, wobei die Detektionsschaltung eine Integrationskapazität (Cint) umfasst, die dazu geeignet ist, einen von der Photodiode erzeugten Photostrom (Ip) zu integrieren, Entladungsmittel (13), die dazu bestimmt sind, die Integrationskapazität zu entladen, und Vergleichsmittel (12), die dazu geeignet sind, eine Integrationsspannung (Vint) an den Anschlussklemmen der Integrationskapazität mit einem Referenz-Spannungschwellenwert (Vseuil) zu vergleichen, um ein Detektionssignal eines Lichtimpulses zu erzeugen, **dadurch gekennzeichnet, dass** der Referenz-Spannungsschwellenwert (Vseuil) ein autoadaptiver Schwellenwert ist, der von einem Pegel eines Lichtgrundrauschens abhängt.

2. Detektionsschaltung nach Anspruch 1, bei der die Vergleichsmittel einen Komparator (17), ein Detektions-Tiefpassfilter (19), der an die Integrationskapazität (Cint) angeschlossen und dazu bestimmt ist, die Integrationsspannung zu filtern, um eine gefilterte Integrationsspannung (Vintf) zu erhalten, einen Summierer (18) zum Addieren eines einstellbaren Spannungsschwellenwertes (Vr) zur gefilterten Integrationsspannung, um den Referenz-Spannungsschwellenwert zu erhalten, wobei der Referenz-Spannungsschwellenwert an einem invertierenden Eingang des Komparators (17) angelegt wird und die Integrationsspannung an einem nicht invertierenden Eingang des Komparators (17) angelegt wird.

3. Detektionsschaltung nach Anspruch 2, bei der der Detektions-Tiefpassfilter (19) ein RC-Filter ist, der dazu geeignet ist, Hochfrequenz-Lichtimpulse des Signals Vint zu unterdrücken.

4. Detektionsschaltung nach Anspruch 1, bei der die Entladungsmittel (13) dazu geeignet sind, die Integrationskapazität (Cint) kontinuierlich zu entladen.

5. Detektionsschaltung nach Anspruch 1, bei der die Entladungsmittel einen Mosfet-Transistor (14) umfassen, von dem eine Source und ein Drain an die Anschlussklemmen der Integrationskapazität angeschlossen sind und von dem ein Gate mit einem Entladungs-Tiefpassfilter (15) verbunden ist, das mit der Integrationskapazität verbunden ist.

6. Detektionsschaltung nach Anspruch 5, bei der das Entladungs-Tiefpassfilter (15) ein RC-Filter ist, der geladen ist, um Hochfrequenz-Restkomponenten des Signals Vint zu unterdrücken.

7. Detektionsschaltung nach einem der vorhergehenden Ansprüche, wobei die Detektionsschaltung vom Typ mit gepufferter direkter Injektion ist.

8. Detektionsschaltung nach Anspruch 7, die eine Verstärkung aufweist, die kollektiv von einer Spannung (Gain_BDI) gesteuert werden kann.

9. Detektionsvorrichtung, umfassend eine Photodiode und eine Detektionsschaltung nach einem der vorhergehenden Ansprüche.

10. Detektionsmatrix, umfassend eine Vielzahl von Detektionsvorrichtungen nach Anspruch 8, die in Zeilen und Spalten angeordnet sind.

## Claims

1. A light pulse detection circuit for connection to a photodiode (2), the detection circuit comprising an integration capacitor (Cint) adapted to integrate a photo-current (Ip) produced by the photodiode, discharge means (13) for discharging the integration capacitor, and comparator means (12) adapted to compare an integration voltage (Vint) across the terminals of the integration capacitor with a reference voltage threshold (Vthresh) in order to produce a light pulse detection signal, the circuit being **characterized in that** the reference voltage threshold (Vthresh) is a self-adaptive threshold depending on a level of light background noise.

2. A detection circuit according to claim 1, wherein the comparator means include a comparator (17), a detection lowpass filter (19) connected to the integration capacitor (Cint) in order to filter the integration voltage so as to obtain a filtered integration voltage (Vintf), a summing circuit (18) for adding an adjustable voltage threshold (Vr) to the filtered integration voltage so as to obtain the reference voltage threshold, the reference voltage threshold being applied to an inverting input of the comparator (17), and the integration voltage being applied to a non-inverting input of the comparator (17).

3. A detection circuit according to claim 2, wherein the detection lowpass filter (19) is an RC filter adapted to eliminate high frequency light pulses from the signal Vint.

4. A detection circuit according to claim 1, wherein the discharge means (13) are adapted to discharge the detection capacitor (Cint) continuously.

5. A detection circuit according to claim 1, wherein the discharge means comprise a MOSFET (14) having a source and a drain connected to the terminals of the integration capacitor and having a grid connected to a discharge lowpass filter (15) connected to the integration capacitor.

6. A detection circuit according to claim 5, wherein the discharge lowpass filter (15) is an RC filter for eliminating residual high frequency components from the signal Vint.

7. A detection circuit according to any preceding claim, the detection circuit being of the buffered direct injection type.

8. A detection circuit according to claim 7, presenting gain that can be controlled collectively by a voltage (Gain_BDI).

9. A detection device comprising a photodiode and a detection circuit according to any preceding claim.

10. A detection matrix comprising a plurality of detection devices according to claim 8 arranged in rows and columns.
